# EUROPÄISCHE PATENTSCHRIFT

(11) **EP 3 839 310 B1**
(45) Veröffentlichungstag und Bekanntmachung des Hinweises auf die Patenterteilung: **12.07.2023**
(21) Anmeldenummer: 20210138.2
(22) Anmeldetag: 16.01.2018
(51) Int. Cl.: F16K 31/385, F16K 31/524, F16K 7/17, F16K 47/08, F16K 1/52, E03C 1/00, G05D 7/01

(54) **SANITÄRVENTIL UND KORRESPONDIERENDE BAUREIHE**
SANITARY VALVE AND CORRESPONDING SERIES
SOUPAPE SANITAIRE ET SÉRIE DE CONSTRUCTION CORRESPONDANTE

(30) Priorität: 10.03.2017 DE 202017101403 U
(43) Veröffentlichungstag der Anmeldung: 23.06.2021
(62) Teilanmeldung aus: 18703492.1
(73) Patentinhaber: Neoperl GmbH, 79379 Müllheim (DE)
(72) Erfinder: Tempel, Marc, 79111 Freiburg Baden-Württemberg (DE)
(74) Vertreter: Mertzlufft-Paufler, Cornelius

(56) Entgegenhaltungen:
- CN-A- 106 051 208
- DE-A1-102012 221 043
- DE-U1-202013 002 281
- FR-A1- 2 334 037
- US-A- 3 955 791
- US-A1- 2004 079 418

## Beschreibung

Die Erfindung betrifft ein Sanitärventil, mit einem Hauptventil, das eine bewegliche Membran aufweist, und einen Pilotventil, mit welchen das Hauptventil ansteuerbar ist, wobei eine Position der Membran durch eine Stellung eines Ventilstößels des Pilotventils vorgebbar ist.

Derartige Sanitärventile sind bekannt und werden beispielsweise eingesetzt, um ein Zu- oder Umschalten in einem Wasserweg mit einer möglichst geringen Betätigungskraft und/oder mit einem möglichst weichen Schaltverhalten zu realisieren.

Die CN 106 051 208 A und DE 10 2012 221043 A1 beschreiben jeweils ein Sanitärventil mit einem Hauptventil und einem Pilotventil, das durch eine Push-Push-Mechanik bedienbar ist.

DE 20 2013 002281 U1 beschreibt ein sanitäres Einbauteil mit einem beweglichen Stellelement und einer Mengenreglereinheit, wobei mit dem Stellelement eine durch die Mengenreglereinheit definierte Durchflussmenge einstellbar ist.

US 3 955 791 A beschreibt ein Pilotventil mit einem eingangsseitig angeordneten Durchflussmengenbegrenzer.

FR 2 334 037 A1 beschreibt ein Pilotventil.

US 2004/079418 A1 beschreibt ein sanitäres Einsetzteil mit einem Rückflussverhinderer und einer Durchflussregler.

Der Erfindung liegt die Aufgabe zugrunde, ein Sanitärventil mit verbesserten Gebrauchseigenschaften zu schaffen.

Zur Lösung der genannten Aufgabe sind erfindungsgemäß die Merkmale des Anspruch 1 vorgesehen. Erfindungsgemäß wird somit bei einem Sanitärventil der eingangs beschriebenen Art zur Lösung der genannten Aufgabe vorgeschlagen, dass dem Hauptventil nachgelagert ein Durchflussmengenregler angeordnet ist. Von Vorteil ist dabei, dass unabhängig von den Strömungseigenschaften am Hauptventil eine gewünschte Obergrenze für eine Durchflussmenge (bezogen auf eine Zeiteinheit) einrichtbar ist. Der Durchflussmengenregler stellte diese Durchflussmenge in einem Arbeitsbereich druckunabhängig ein.

Bei einer vorteilhaften Ausgestaltung kann vorgesehen sein, dass der Durchflussmengenregler in einem rohrförmigen Abschnitt des oder eines Ventilausgangs des Hauptventils angeordnet ist. Somit ist der Durchflussmengenregler einfach ohne größere konstruktive Änderungen einsetzbar. Hierbei kann vorgesehen sein, dass der Durchflussmengenregler durch einen Ventilsitz des Hauptventils bis zu einem Anschlag in den rohrförmigen Abschnitt eingesetzt ist. Somit ist konstruktiv erreichbar, dass der Durchflussmengenregler nach einem Einbau schwer entfernt werden kann. Dies kann helfen, eine Einhaltung gesetzlicher oder sonstiger Vorgaben sicherzustellen.

Bei einer vorteilhaften Ausgestaltung kann vorgesehen sein, dass ein, insbesondere der bereits erwähnte, einen Regelspalt bildende Reglerkern eine in einer Richtung verjüngende Grundform aufweist. Somit ist eine Verstellbarkeit der Obergrenzen der Durchflussmenge, also der Soll-Durchflussmenge, in an sich bekannte Weise erreichbar. Hierzu ist der Reglerkern bevorzugt beweglich angeordnet. Insbesondere kann vorgesehen sein, dass die Richtung längs einer Stellrichtung der Membran ausgerichtet ist. Dies ermöglicht eine Kopplung der Verstellung der Membran mit der Verstellung des Reglerkerns.

Bei einer vorteilhaften Ausgestaltung kann vorgesehen sein, dass an dem Reglerkern ein Regelprofil ausgebildet ist, welches mit einem elastisch verformbaren Regelelement einen Regelspalt mit einem druckabhängigen Öffnungsquerschnitt definiert. Dies stellt eine an sich bekannte, hier vorteilhaft zu einer Definition einer Soll-Durchflussmenge verwendbare, Möglichkeit dar, die Durchflussmenge druckunabhängig zu realisieren.

Bei einer vorteilhaften Ausgestaltung kann vorgesehen sein, dass ein Regelelement als O-Ring ausgebildet ist. Somit ist ein einfach verfügbares und gut beherrschbares Regelelement verwendbar. Hierbei kann vorgesehen sein, dass ein, beispielsweise der bereits erwähnte, Reglerkern das Regelelement durchgreift. Somit ist durch eine Verstellung des Reglerkerns relativ zu dem Regelelement beispielsweise dann, wenn der Reglerkern verjüngend ausgeführt ist, eine Veränderung des Regelspalts erreichbar, um die Soll-Durchflussmenge zu verändern.

Erfindungsgemäß ist vorgesehen, dass eine Soll-Durchflussmenge des Durchflussmengenreglers mit einer Push-push-Mechanik veränderbar ist. Dies ermöglicht ein einfaches Verstellen zwischen definierten Soll-Durchflussmengen.

Weiter ist erfindungsgemäß vorgesehen, dass ein Reglerkern des Durchflussmengenreglers verstellbar angeordnet und mit der Push-push-Mechanik gekoppelt ist. Somit kann der Reglerkern definierte Positionen einnehmen, die vorgegebenen, diskreten Soll-Durchflussmengen entsprechen. Besonders günstig ist es, wenn der Reglerkern mit einer Push-push-Mechanik, die das Hauptventil betätigt und/oder die am Pilotventil angreift, gekoppelt ist. Es sind somit das Hauptventil und der Durchflussmengenregler gemeinsam betätigbar. Besonders einfach ist es, wenn der Reglerkern verschiebbar ist.

Bei einer vorteilhaften Ausgestaltung kann vorgesehen sein, dass der Reglerkern mit der beweglichen Membrane verbunden ist. Dies stellt eine besonders einfach realisierbare Art der Ankopplung an die Push-push-Mechanik dar.

Bei einer vorteilhaften Ausgestaltung kann vorgesehen sein, dass das Regelelement in einer Aufnahme angeordnet ist, deren radialer Abschluss durch einen rohrförmigen Abschnitt, beispielsweise den bereits erwähnten rohrförmigen Abschnitt, eines Ventilauslasses, insbesondere des bereits beschriebenen Ventilauslasses, gebildet ist. Somit ist ein Regelelement mit größtmöglichem Durchmesser einsetzbar. Allgemein kann gesagt werden, dass ein Regelverhalten des Regelelements umso besser beherrschbar ist, je größer die Außenabmessungen des Regelelements sind. Die Ausgestaltung verzichtet auf einen radialen Abschluss der Aufnahme nach außen durch den Durchflussmengenregler selbst und stellt somit zusätzlichen Raum für ein größeres Regelelement zur Verfügung. Der radial äußere Abschluss der Aufnahme kann hierbei durch den erwähnten rohrförmigen Abschnitt gebildet sein.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Schutzansprüche untereinander und/oder mit einzelnen oder mehreren Merkmalen der Ausführungsbeispiele.

Es zeigt:
Fig. 1 einen Axialschnitt durch ein erfindungsgemäßes Sanitärventil,
Fig. 2-4 unterschiedlichen Schaltpositionen an dem Sanitärventil nach Fig. 1,
Fig. 5 Durchflusskurven zu Schaltpositionen eines Sanitärventils,
Fig. 6 eine dreidimensionale Schrägansicht des Sanitärventils nach Fig. 1,
Fig. 7 Einzelteile des Sanitärventils nach Fig. 1, insbesondere der Push-push-Mechanik, in Explosionsdarstellung,
Fig. 8 Einzelteile der Push-push-Mechanik aus Fig. 7,
Fig. 9 eine abgewickelte Ansicht auf das Innere des Führungsteils aus Fig. 8 mit der Lage der Führungselemente und Verdrängerelemente,
Fig. 10-13 unterschiedliche Schaltpositionen zur Erläuterung der Push-push-Mechanik nach Fig. 8,
Fig. 14 den Übergang zwischen zwei Schaltpositionen,
Fig. 15-18 die zugehörigen Schaltpositionen zu Fig. 10-13 eines Sanitärventils, das nicht Teil der beanspruchten Erfindung ist,
Fig. 19 eine Alternative zu Fig. 8,
Fig. 20 ein Sanitärventil , das nicht Teil der Erfindung ist, im Axialschnitt,

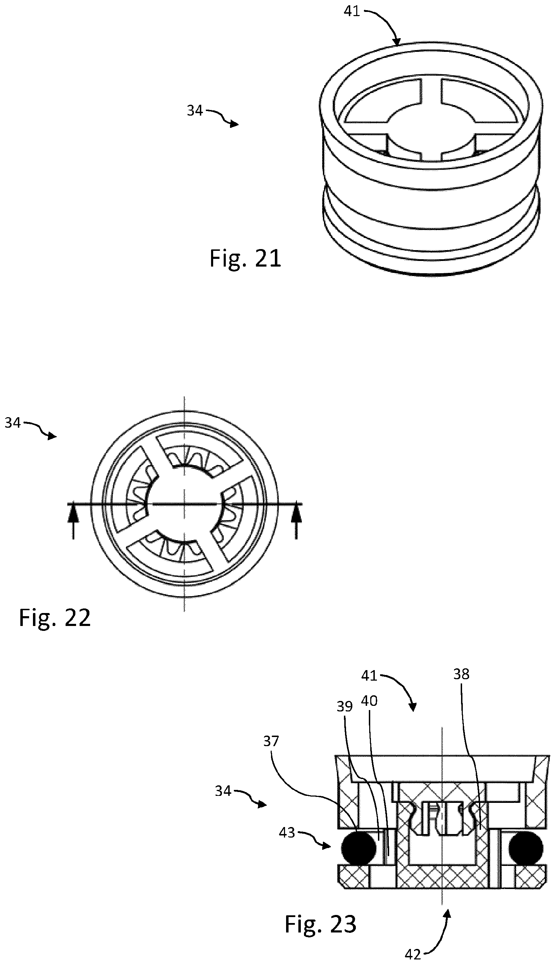

Fig. 21 eine dreidimensionale Schrägansicht auf die Zuströmseite des nicht erfindungsgemäßen Durchflussmengenreglers aus Fig. 20,
Fig. 22 eine Draufsicht auf die Zuströmseite zu Fig. 21,
Fig. 23 eine Axialschnittansicht entlang des Schnitts in Fig. 22,

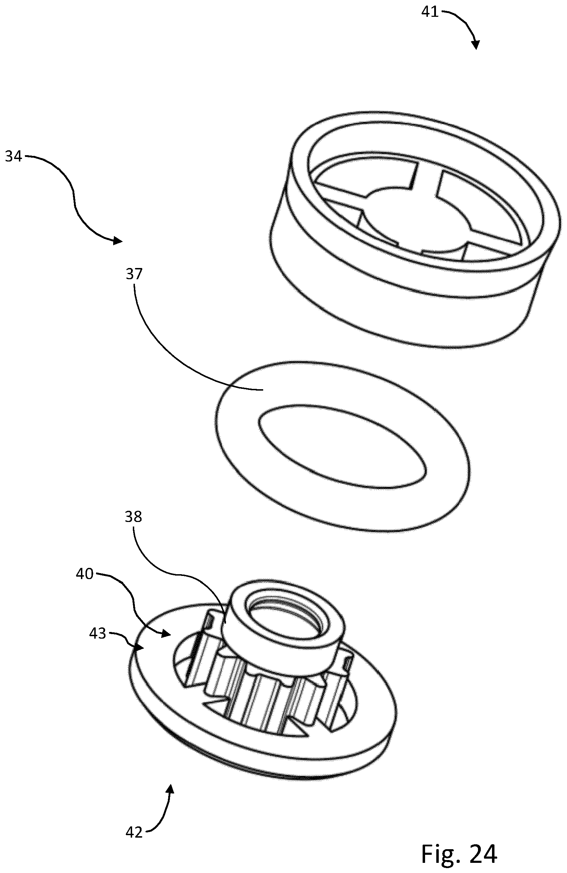

Fig. 24 eine Explosionsdarstellung zu Fig. 21,

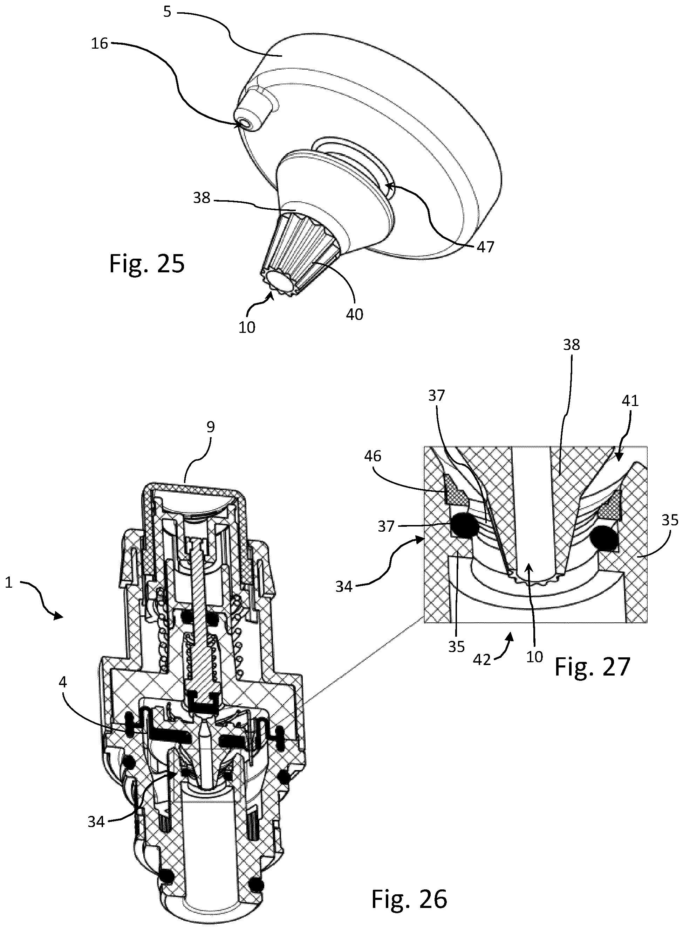

Fig. 25 eine erfindungsgemäße Ausbildung eines Reglerkerns an einem Ventilkörper,
Fig. 26 einen schrägen Axialschnitt des erfindungsgemäßen Sanitärventils nach Fig. 1 und
Fig. 27 eine Vergrößerung aus Fig. 26.

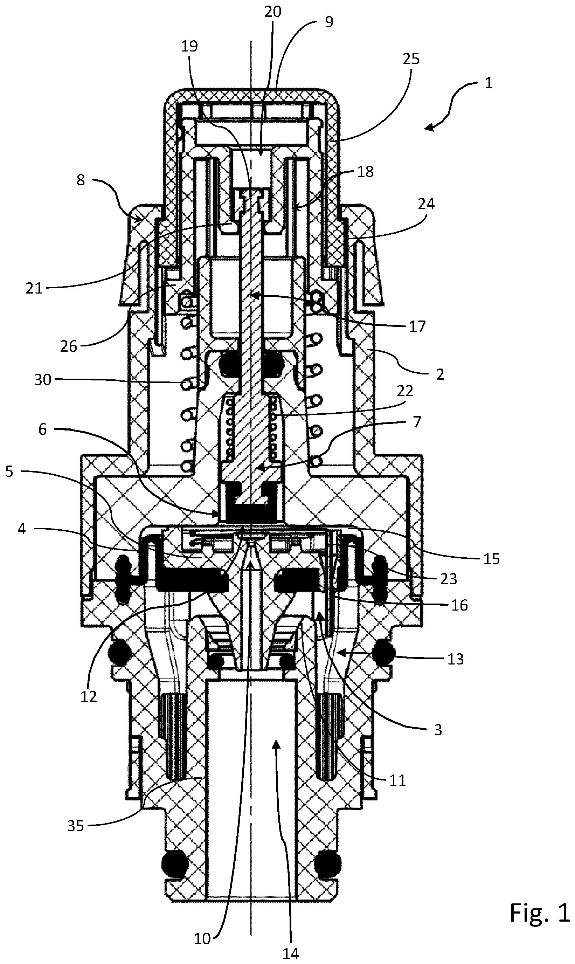

Figur 1 zeigt ein im Ganzen mit 1 bezeichnetes erfindungsgemäßes Sanitärventil, welches in einem Gehäuse 2 ein Hauptventil 3 aufweist.

Das Hauptventil 3 ist in an sich bekannter mit einer beweglichen Membran 4 ausgerüstet, welche aus einem elastischen Material besteht und einen Ventilkörper 5 des Hauptventils 3 trägt.

Die Membran 4 ist in ebenfalls an sich bekannter Weise mit einem Pilotventil 6 ansteuerbar. Hierzu weist das Pilotventil 6 einen längsverschieblichen Ventilstößel 7 auf, dessen Stellung entlang seines Stellwegs die jeweilige Position des Ventilkörpers 5 und somit der Membran 4 vorgibt.

Das Sanitärventil 1 weist weiter eine Push-push-Mechanik 8 auf. An dieser Push-push-Mechanik 8 ist außenseitig ein Betätigungselement 9 ausgebildet, mit welchem die Push-push-Mechanik 8 durch wiederholtes Drücken zwischen verschiedenen Schaltpositionen umschaltbar ist.

Der Ventilstößel 7 ist mit der Push-push-Mechanik 8 zur Herstellung einer Wirkverbindung verbunden.

Die Push-push-Mechanik 8 weist wenigstens drei Schaltzustände auf, zwischen denen der Ventilstößel 7 aufgrund der Wirkverbindung umschaltbar ist.

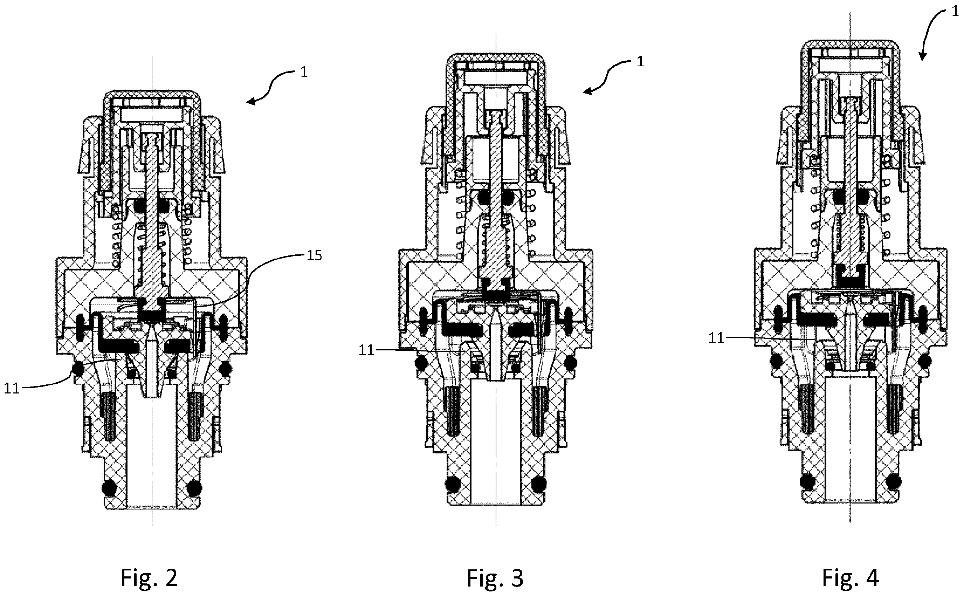

Fig. 2 zeigt eine untere oder äußere Schaltposition, in der das Hauptventil 3 geschlossen und somit in einer Schließstellung ist, Fig. 3 eine mittlere oder innere Schaltposition, in welcher das Hauptventil 3 ungefähr halb geöffnet und somit in einer Zwischenstellung ist, und eine obere oder weitere äußere Schaltposition, in welcher das Hauptventil 3 vollständig geöffnet und somit in einer Offenstellung ist.

Das Pilotventil 7 weist hierbei eine Entlastungsöffnung 10 auf, die an dem Ventilkörper 5 und somit an der beweglichen Membran 4 ausgebildet ist.

Wird die Entlastungsöffnung 10 verschlossen, so baut sich ein Druck auf, der die Membran 4 mit dem Ventilkörper 5 in einen Ventilsitz 11 des Hauptventils 3 drückt. Das Hauptventil 3 ist dann in seiner Schließstellung.

Wird die Entlastungsöffnung 10 geöffnet, so baut sich der erwähnte Druck ab, so dass sich die Membran 4 mit dem Ventilkörper 5 aus dem Ventilsitz 11 entfernt. Das Hauptventil 3 wird somit geöffnet.

Dementsprechend zeigen die Figuren 2 bis 4 unterschiedliche Stellungen des Ventilstößels 7, die jeweils eine Schaltposition der wenigstens drei Schaltpositionen, wie sie durch die Push-push-Mechanik 8 vorgegeben sind, bilden.

Fig. 4 zeigt eine äußere Schaltposition, die eine Offenstellung des Pilotventils definiert, und Fig. 2 eine weitere äußere Schaltposition, die eine Schließstellung des Pilotventils 6 definiert. In Fig. 3 ist der Ventilstößel 7 dagegen in einer durch die Push-push-Mechanik 8 vorgegebenen Zwischenstellung, die eine innere Schaltposition auf dem Stellweg zwischen den äußeren Schaltpositionen darstelllt.

In dieser inneren Schaltposition bildet der Ventilstößel 7 einen Anschlag 12 für die bewegliche Membran 4, der hierzu an dem Ventilkörper 5 angreift.

Als nächstes wird der Vollständigkeit halber das Zusammenspiel von Hauptventil 3 und Pilotventil 6 näher erläutert.

Wie bereits erwähnt, hat das Hauptventil 3 einen Ventilsitz 11, der mit einem Ventilkörper 5 und der Membran 4 dicht verschließbar ist. Der Ventilsitz 11 ist zwischen wenigstens einem Ventileingang 13 und wenigstens einem Ventilausgang 14 angeordnet. Das Hauptventil 3 trennt daher den wenigstens einen Ventileingang 13 von dem wenigstens einen Ventilausgang 14 und stellt diese her.

Die Membran schließt eine Druckkammer 15 ab, die aus dem wenigstens einen Ventileingang 13 über eine Befüllöffnung 16 befüllbar ist. Die Befüllöffnung 16 ist immer offen.

Hierdurch wird erreicht, dass die Membran 4 (mit dem an ihr angeordneten Ventilkörper 5) bei befüllter Druckkammer 15 in einer Schließstellung den Ventilsitz 11 verschließt und bei entlasteter Druckkammer 15 in einer Offenstellung den Ventilsitz 11 freigibt.

Wie bereits beschrieben ist die Entlastungöffnung 10 mit dem Ventilstößel 7 verschließbar und freigebbar. Da die Entlastungsöffnung 10 in den wenigstens einen Ventilausgang 14 mündet, führt ein Öffnen der Entlastungsöffnung 10 zu dem bereits erwähnten Druckabbau in der Druckkammer 15 und somit zu einem Öffnen des Hauptventils 3. Die Entlastungsöffnung 10 ist hierzu größer als die Befüllöffnung 16 dimensioniert.

In der Zwischenstellung wird sich die Membran 4 auf den Ventilstößel 7 hin bewegen, bis der Ventilkörper 5 am Anschlag 12 anliegt. Dann wird ein Druckaufbau die Membran 4 vom Anschlag weg bewegen, wodurch die Entlastungsöffnung 10 wieder frei ist. Es folgt ein Druckabbau, der die Membran 4 wieder gegen den Anschlag 12 drückt. Es ergibt sich somit ein Gleichgewicht, in dem die Membran 4 an dem Anschlag 12 anliegt. Das Hauptventil 3 nimmt somit eine Zwischenstellung zwischen voll geöffnet und voll geschlossen ein.

Der Ventilstößel 7 ist über ein Steuerelement 17 an die Push-push-Mechanik 8 angekoppelt, um die bereits beschriebenen Schaltpositionen einzunehmen. Das Steuerelement 17 ist von außen in die Druckkammer 15 dicht eingeführt.

In der Wirkverbindung zwischen dem Pilotventil 6 und der Push-push-Mechanik 8 ist außerdem eine Ausgleichvorrichtung 18 ausgebildet, die eine Betätigung der Push-push-Mechanik 8 selbst dann erlaubt, wenn das Pilotventil 6 geschlossen ist und nicht weiter gegen den Ventilsitz 15 verfahren werden kann.

Hierzu weist die Ausgleichvorrichtung 18 einen Ausgleichstößel 19 auf, der beweglich in einer Stößelaufnahme 20 geführt ist, wobei die Stößelaufnahme 20 einen einseitigen Stößelanschlag 21 für den Ausgleichstößel 19 bildet.

Ein Rückstellelement 22, welches den Ventilstößel 7 gegen das Gehäuse 2 beaufschlagt, presst den Ausgleichstößel 19 gegen den Stößelanschlag 21, soweit dies in der jeweiligen Schaltposition möglich ist, um die Kopplung oder Wirkverbindung zwischen dem Pilotventil 6 und der Push-push-Mechanik 8 herzustellen.

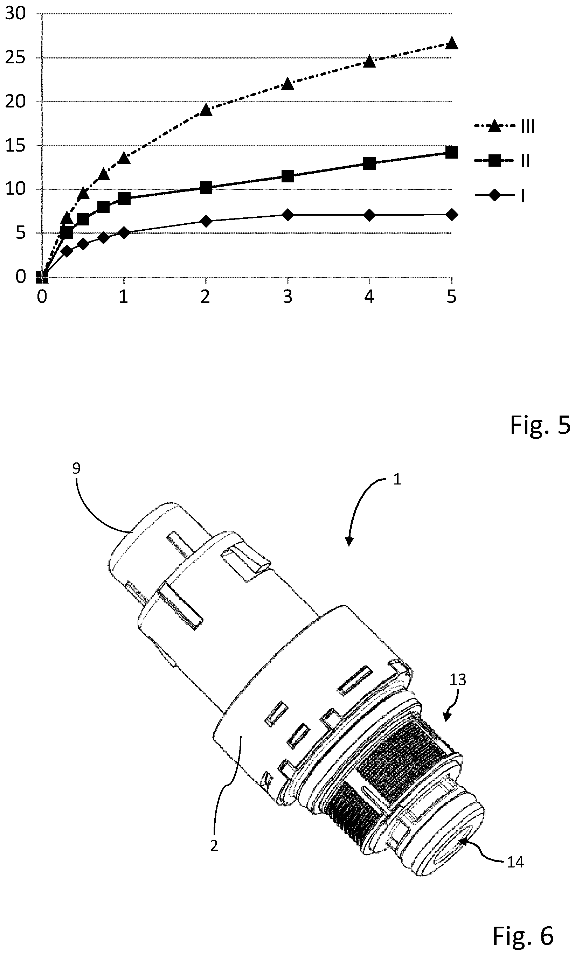

Fig. 6 zeigt eine dreidimensionale Außenansicht auf das beschriebene Sanitärventil 1. Das Gehäuse 2 ist außenseitig zum Einsetzen in eine nicht weiter dargestellte Armatur ausgebildet.

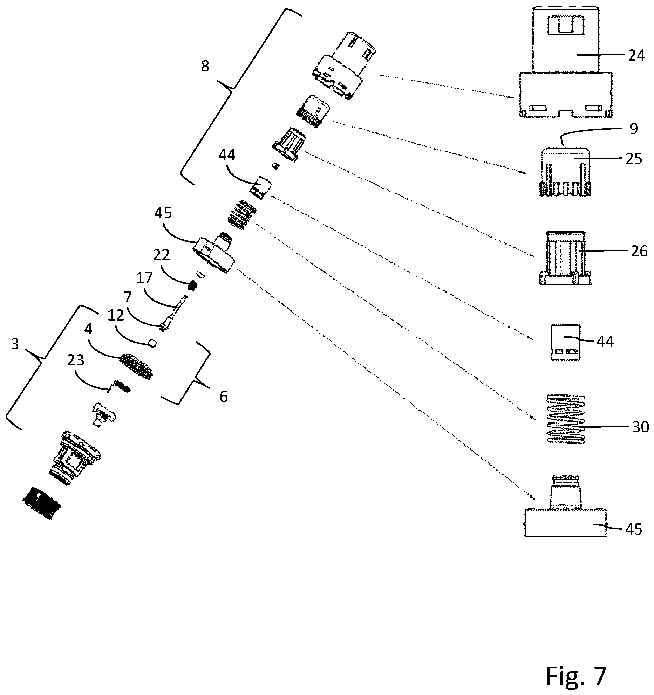

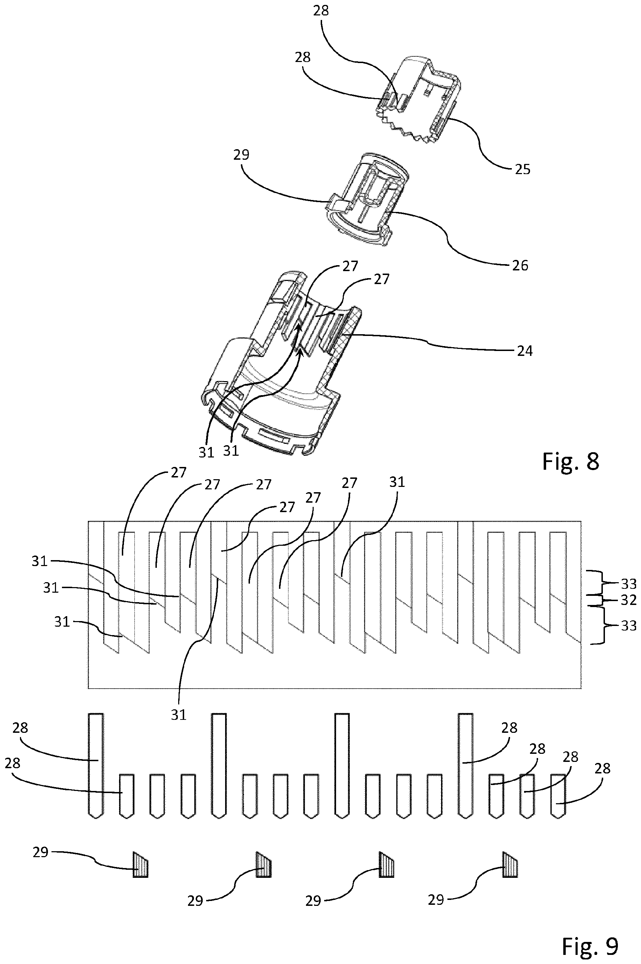

Fig. 7 und 8 zeigen Einzelteile des beschriebenen Sanitärventils 1 zur Erläuterung des Aufbaus des Hauptventils 3, des Pilotventils 6 und der Push-push-Mechanik 8. Die Bezugszeichen sind übereinstimmend mit den Figuren 1 bis 5 gewählt, so dass sich die Erläuterungen zu diesen Figuren auch auf die Figuren 7 und 8 lesen lassen.

Zum Hauptventil 3 ist zusätzlich ein Reinigungselement 23 ersichtlich, welches federnd nachgiebig ausgebildet ist und mit einem stiftförmigen freien Ende die Befüllöffnung 16 durchsetzt und freihält. Mit seinem festen Ende ist das Reinigungselement 22 an dem Gehäuse 2 festgelegt.

Die Push-push-Mechanik 8 hat ein Führungsteil 24, das am Gehäuse 2 oder relativ zu diesem fest angeordnet ist.

In diesem hülsenförmigen Führungsteil 24 laufen das Verdrängerteil 25 und das Schaltteil 26, wobei an dem Verdrängerteil 25 außenseitig das Betätigungselement 9 ausgebildet ist.

An dem Führungsteil 24 sind innenseitig axial verlaufende, hier nutförmige, Führungsbahnen 27 ausgebildet. In diese Führungsbahnen 27 greifen Verdrängerelemente 28 des Verdrängerteils 25 und Führungselemente 29 des Schaltteils 26 ein.

Hierbei sind die als Vorsprünge ausgebildeten Führungselemente 29 unterhalb der ebenfalls als Vorsprünge ausgebildeten Verdrängerelemente 28 angeordnet. Somit führt eine Rückholfeder 30, die eine Rückstellkraft auf das Schaltteil 26 einbringt, auch das Verdrängerteil 25 in seine jeweils oberste Position. Die Rückholfeder 30 wird hierbei auf einer Federführungshülse 44 geführt und stützt sich über ein Federwiderlager 45 an dem Gehäuse 2 ab.

Demnach hat die Push-push-Mechanik 8 ein ortsfestes Führungsteil 24 mit einer Anordnung von mehreren parallel verlaufenden Führungsbahnen27. Jeder Führungsbahn 27 ist eine Schaltposition zugeordnet, die durch einen Anschlag 31 in der jeweiligen Führungsbahn 27 definiert ist.

Die Push-push-Mechanik 8 hat somit weiter ein relativ zum Gehäuse 2 und zum Führungsteil 24 bewegliches Verdrängerteil 25. An diesem sind Verdrängerelemente 28 ausgebildet, die als Vorsprung radial nach außen abstehen und in jeweils eine der radial nach innen geöffneten Führungsbahnen 27 eingreifen. Somit ist in jeder Führungsbahn 27 ein Verdrängerelement 28 angeordnet. Diese Verdrängerelemente 28 verbleiben immer in ihrer jeweiligen Führungsbahn 27.

Die Push-push-Mechanik 8 hat somit schließlich das relativ zum Gehäuse 2 mit dem Führungsteil 24 und zu dem Verdrängerteil 25 beweglich angeordnete Schaltteil 26. Dieses weist vier radial nach außen abstehende Führungselemente 29 auf, die in jeweils eine Führungsbahn 27 eingreifen. Mit dem jeweiligen Verdrängerelement 28 können diese Führungselemente 29 aus der Führungsbahn 27 über deren axial offenes Ende hinausgeschoben werden.

Durch die Rückholfeder 30 und entsprechende Schrägen an dem Verdrängerteil 25 und dem Führungsteil 24 wird dann das Schaltteil 26 in die nächste, benachbarte Führungsbahn 27 überführt.

In den Führungsbahnen 27 ist jeweils der bereits erwähnte Anschlag 31 für das Führungselement 29 ausgebildet, welcher jeweils eine Schaltposition definiert.

Die Figur 9 zeigt in einer abgewickelten Ansicht die relative Lage der Führungsbahnen 27 mit ihren jeweiligen Anschlägen 31, der Verdrängerelemente 28 und der Führungselemente 29 in einer Art auseinander gezogener Darstellung ähnlich einer Explosionsdarstellung.

Es ist erkennbar, dass durch die Anordnung der Anschläge 31 zwei äußere Schaltpositionen und zwei innere Schaltpositionen definiert werden, wie im Folgenden erläutert wird.

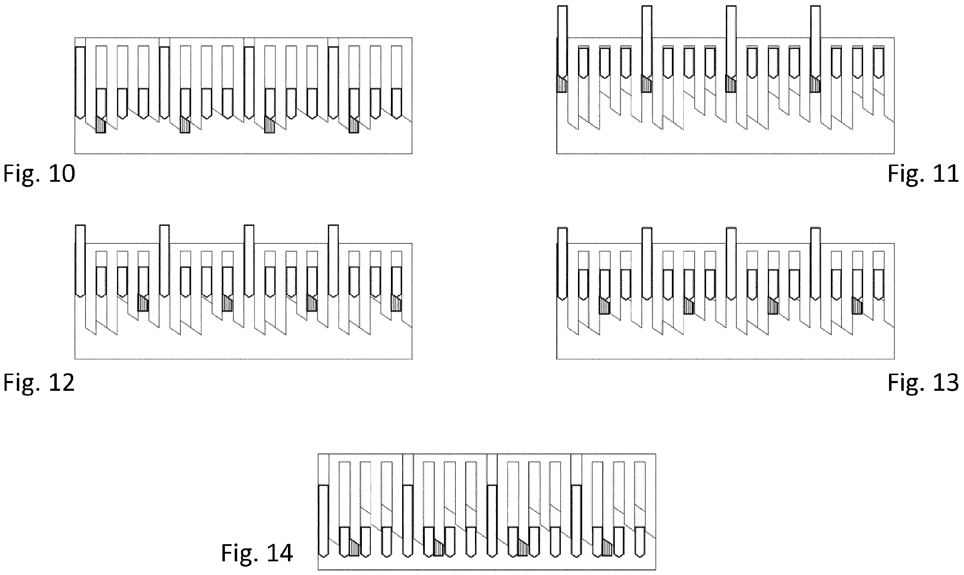

Die Figuren 10 bis 14 zeigen unterschiedliche Eingriffszustände der Teile aus Fig. 8.

Hierbei zeigt Figur 10 die unterste Position der Führungselemente 29, so dass eine Schließstellung wie in Figur 2 definiert ist.

Figur 11 zeigt dagegen eine oberste Position der Führungselemente 29, so dass eine Offenstellung wie in Figur 4 definiert ist.

Die Figuren 12 und 13 zeigen dagegen Zwischenstellungen. Im Unterschied zu den Figuren 2 bis 4 sind jetzt zwei Zwischenstellungen definiert, die zu zwei inneren Schaltpositionen gehören. Jede dieser Schaltpositionen entspricht in etwa der Darstellung nach Figur 3.

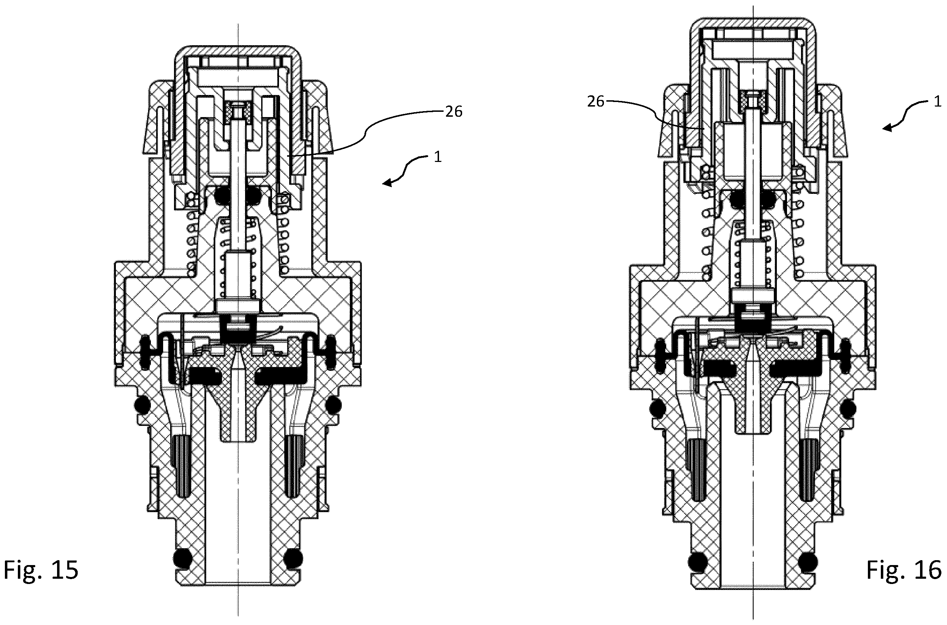

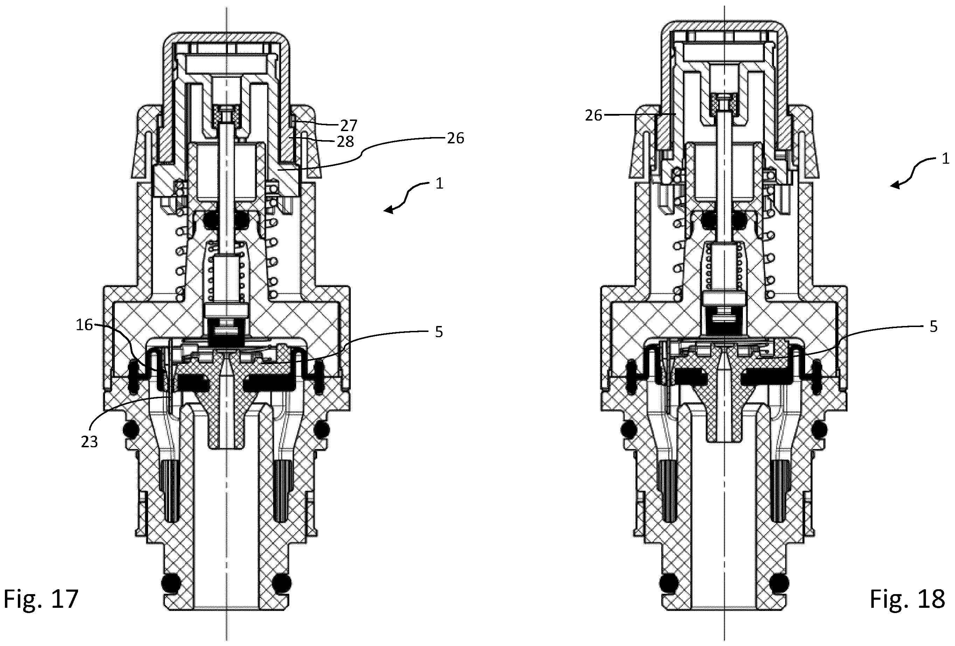

Die Figuren 15 bis 18 zeigen diese vier Schaltpositionen, wobei Fig. 15 die Schaltposition nach Fig. 10, bei Fig. 16 die Schaltposition nach Fig. 12, bei Fig. 17 die Schaltposition nach Fig. 13 und bei Fig. 18 die Schaltposition nach Fig. 11 realisiert ist.

Somit realisiert die Push-push-Mechanik 8 zwei äußere Schaltpositionen nach Fig. 15 und 18 und zwei innere Schaltpositionen nach Fig. 16 und 17. Aus den Figuren 10 bis 13 ist ersichtlich, dass die zwei inneren Schaltpositionen zwischen den zwei äußeren Schaltpositionen liegen, wobei ein Abstand 32 zwischen den zwei inneren Schaltpositionen kleiner ist als ein Abstand 33 jeder der inneren Schaltposition zu einer jeweils benachbarten oder nächstliegenden äußeren Schaltposition.

Fig. 5 zeigt unterschiedliche Durchflusskurven (Durchflussmenge über der Druckdifferenz zwischen dem Ventileingang 13 und dem Ventilausgang 14 des Sanitärventils 1) für die Schaltpositionen gemäß Fig. 15 bis 18.

Es kann gesagt werden, dass die Schaltposition nach Fig. 16 zu der Kurve I, die Schaltposition nach Fig. 17 zu der Kurve II und die Schaltposition nach Fig. 18 zu der Kurve III aus Fig. 5 gehört. Die Schaltposition gemäß Fig. 15 hat den Durchfluss Null. Die größeren Abstände 33 sind erforderlich, um Totwege in der Push-push-Mechanik 8 und im Pilotventil 6 zu berücksichtigen, so dass sich die näherungsweise gleichförmige Verteilung der Kurven I - III in Fig. 5 ergibt.

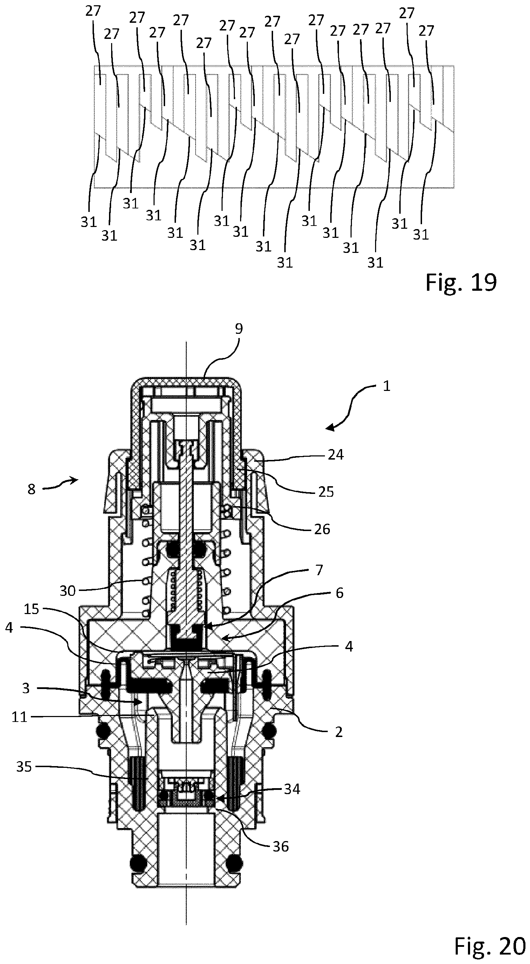

Figur 19 zeigt eine mögliche Anordnung der Anschläge 31 in den Führungsbahnen 27, mit der sich nur drei Schaltpositionen, beispielsweise gemäß Fig. 2 bis 4, ergeben.

Das Führungsteil 24 ist im Übrigen gegenüber den vorangehenden Zeichnungen unverändert, so dass durch den bloßen Austausch des Führungsteils 24 eine Baureihe von Sanitärventilen 1 mit unterschiedlichem Schalt- und/oder Durchflussverhalten gebildet werden kann.

Figur 20 zeigt ein nicht erfindungsgemäßes Sanitärventil 1. Zur Bezeichnung sind dieselben Bezugszeichen wie bei den vorangehenden Figuren 1 bis 19 gewählt, so dass die Erläuterungen zu den Figuren 1 bis 19 auch zu Figur 20 gelten.

Dem Hauptventil 3 abströmseitig nachgelagert ist zusätzlich ein nicht erfindungsgemäßer Durchflussmengenregler 34 angeordnet, der in dieser Ausführung jedoch nicht Regelbar ist.

Der Durchflussmengenregler 34 ist hierbei in einem rohrförmigen Abschnitt 35 des Ventilausgangs 14 des Hauptventils 3 angeordnet. Aus der Figur 20 ist ersichtlich, dass der Durchflussmengenregler 34 durch den Ventilsitz 11 des Hauptventils 3 in den rohrförmigen Abschnitt 35 bis zu einem Anschlag 36 eingesetzt ist.

## Patentansprüche

1. Sanitärventil, mit einem Hauptventil (3), das eine bewegliche Membran (4) aufweist, und einem Pilotventil (6), mit welchen das Hauptventil (3) ansteuerbar ist, wobei eine Position der Membran (4) durch eine Stellung eines Ventilstößels (7) des Pilotventils (6) vorgebbar ist, **dadurch gekennzeichnet, dass** das Sanitärventil einen dem Hauptventil (3) nachgelagert angeordneten Durchflussmengenregler (34) aufweist, wobei eine Soll-Durchflussmenge des Durchflussmengenreglers (34) mit einer Push-push-Mechanik (8) veränderbar ist, wobei ein Reglerkern (38) des Durchflussmengenreglers (34) verstellbar, insbesondere verschiebbar, angeordnet und mit der Push-push-Mechanik (8) gekoppelt ist.

2. Sanitärventil nach Anspruch 1, **dadurch gekennzeichnet, dass** der Durchflussmengenregler (34) in einem rohrförmigen Abschnitt (35) eines Ventilausgangs (14) des Hauptventils (3) angeordnet, insbesondere durch einen Ventilsitz (11) des Hauptventils (3) bis zu einem Anschlag in den rohrförmigen Abschnitt (35) eingesetzt, ist.

3. Sanitärventil nach einem der vorangehenden Ansprüche, **dadurch gekennzeichnet, dass** der einen Regelspalt (39) bildender Reglerkern (38) eine in einer Richtung, insbesondere längs einer Stellrichtung der Membran (4), verjüngende Grundform aufweist.

4. Sanitärventil nach einem der vorangehenden Ansprüche, **dadurch gekennzeichnet, dass** an dem Reglerkern (38) ein Regelprofil (40) ausgebildet ist, welches mit einem elastisch verformbaren Regelelement (37) einen oder den Regelspalt (39) mit einem druckabhängigen Öffnungsquerschnitt definiert.

5. Sanitärventil nach einem der vorangehenden Ansprüche, **dadurch gekennzeichnet, dass** ein Regelelement (37) als O-Ring ausgebildet ist, insbesondere wobei der oder ein Reglerkern (38) das Regelelement (37) durchgreift.

6. Sanitärventil nach einem der vorangehenden Ansprüche, **dadurch gekennzeichnet, dass** der Reglerkern (38) mit der beweglichen Membran (4) verbunden ist.

7. Sanitärventil nach einem der Ansprüche 4 oder 5, **dadurch gekennzeichnet, dass** das Regelelement (37) in einer Aufnahme angeordnet ist, deren radialer Abschluss durch den oder einen rohrförmigen Abschnitt des oder eines Ventilausgang (14) gebildet ist.

## Claims

1. Sanitary valve, having a main valve (3) which has a movable diaphragm (4), and a pilot valve (6) by which the main valve (3) is actuatable, wherein a position of the diaphragm (4) is predefinable by a setting of a valve tappet (7) of the pilot valve (6), **characterized in that** the sanitary valve has a flowrate regulator (34) arranged downstream from the main valve (3), wherein a nominal flowrate of the flowrate regulator (34) is modifiable by a push-push mechanism (8), wherein a regulator core (38) of the flowrate regulator (34) is arranged to be adjustable, in particular displaceable, and is coupled to the push-push mechanism (8).

2. Sanitary valve according to Claim 1, **characterized in that** the flowrate regulator (34) is arranged in a tubular portion (35) of a valve outlet (14) of the main valve (3), in particular being inserted through a valve seat (11) of the main valve (3) as far as a stop in the tubular portion (35).

3. Sanitary valve according to one of the preceding claims, **characterized in that** the regulator core (38), which forms a regulating gap (39), has a basic shape that tapers in one direction, in particular along an adjustment direction of the diaphragm (4).

4. Sanitary valve according to one of the preceding claims, **characterized in that** a regulating profile (40) is formed on the regulator core (38) and, with an elastically deformable regulating element (37), defines a or the regulating gap (39) having a pressure-dependent opening cross section.

5. Sanitary valve according to one of the preceding claims, **characterized in that** a regulating element (37) is formed as an O-ring, in particular wherein the or a regulator core (38) engages through the regulating element (37).

6. Sanitary valve according to one of the preceding claims, **characterized in that** the regulator core (38) is connected to the movable diaphragm (4).

7. Sanitary valve according to either of Claims 4 and 5, **characterized in that** the regulating element (37) is arranged in a seat, of which the radial closure is formed by the or a tubular portion of the or a valve outlet (14).

## Revendications

1. Vanne sanitaire dotée d'une vanne principale (3) qui comporte une membrane mobile (4) et d'une vanne pilote (6) avec laquelle la vanne principale (3) peut être commandée, sur laquelle une position de la membrane (4) peut être définie par le réglage d'un poussoir (7) de la vanne pilote (6), **caractérisée en ce que** cette vanne sanitaire comporte un régulateur de débit (34) monté en aval de la vanne principale (3), un débit nominal du régulateur de débit (34) pouvant être modifié avec un mécanisme "push-push" et un noyau de régulateur (38) du régulateur de débit (34) étant disposé de façon réglable, en particulier de façon coulissante, et couplé avec le mécanisme "push-push".

2. Vanne sanitaire selon la revendication 1, **caractérisée en ce que** le régulateur de débit (34) est agencé dans une section tubulaire (35) d'une sortie de vanne (14) de la vanne principale (3), en particulier inséré dans la section tubulaire (35) à travers un siège de vanne (11) de la vanne principale (3) jusqu'à une butée.

3. Vanne sanitaire selon une des revendications précédentes, **caractérisée en ce que** le noyau de régulateur (38) formant une fente de réglage (39) présente une forme de base s'amincissant dans une direction, en particulier le long d'une direction de réglage de la membrane (4).

4. Vanne sanitaire selon une des revendications précédentes, **caractérisée en ce que** sur le noyau de régulateur (38) est formé un profil de réglage (40) qui définit avec un élément de réglage déformable élastiquement (37) une ou la fente de réglage (39) avec une section transversale d'ouverture dépendant de la pression.

5. Vanne sanitaire selon une des revendications précédentes, **caractérisée en ce qu'**un élément de réglage (37) est configuré comme une bague torique, en particulier le ou un noyau de régulateur (38) traversant cet élément de réglage (37).

6. Vanne sanitaire selon une des revendications précédentes, **caractérisée en ce que** le noyau de régulateur (38) est relié avec la membrane mobile (4).

7. Vanne sanitaire selon une des revendications 4 ou 5, **caractérisée en ce que** l'élément de réglage (37) est disposé dans un logement dont l'extrémité radiale est formée par la ou une section tubulaire de la ou d'une sortie de vanne (14).
